# FASCICULE DE BREVET EUROPEEN

(11) **EP 0 800 474 B1**
(45) Date de publication et mention de la délivrance du brevet: **23.01.2002**
(21) Numéro de dépôt: 96934900.0
(22) Date de dépôt: 11.10.1996
(51) Int. Cl.: B64C 1/00, B21D 26/02

(54) **STRUCTURE METALLIQUE CREUSE MONOBLOC ET DISSYMETRIQUE TELLE QU'UN BORD DE FUITE D'UN BEC D'ATTAQUE D'UNE VOILURE D'AERONEF ET SON PROCEDE DE FABRICATION**
HOHLE, EINTEILIGE UND ASSYMETRISCHE METALLSTRUKTUR z.B. LUFTAUSLASS-SCHLITZE EINER FLÜGELVORDERKANTE EINES FLUGZEUGES UND VERFAHREN ZU IHRER HERSTELLUNG
HOLLOW, INTEGRAL ASYMMETRICAL METAL STRUCTURE SUCH AS AN AIRCRAFT WING SLAT TRAILING EDGE AND METHOD OF MANUFACTURE

(30) Priorité: 12.10.1995 FR 9511975
(43) Date de publication de la demande: 15.10.1997
(73) Titulaire: AEROSPATIALE Société Nationale Industrielle, 75781 Paris Cédex 16 (FR)
(72) Inventeur: DONAL, Valérie, F-75015 Paris (FR); ANDRE, Joel, René, F-78380 Bougival (FR); BOURIQUET, Jacques, F-92270 Bois-Colombes (FR)
(74) Mandataire: Poulin, Gérard
(86) Numéro de dépôt international: FR9601594
(87) Numéro de publication internationale: WO9713683

(56) Documents cités:
- EP-A- 0 130 583
- EP-A- 0 500 458
- EP-A- 0 549 172
- FR-A- 2 647 373
- US-A- 4 916 027
- US-A- 5 330 092

## Description

### Domaine Technique

L'invention concerne principalement une structure métallique creuse comprenant des peaux externes de courbures sensiblement différentes, qui se rejoignent selon un bord, ainsi que des renforts internes délimitant des alvéoles entre les peaux externes.

Une telle structure, dont l'originalité réside à la fois dans sa dissymétrie et dans son caractère monobloc, peut avantageusement être utilisée pour constituer au moins un tronçon du bord de fuite d'un bec d'attaque d'une voilure d'aéronef.

L'invention concerne également un procédé permettant de fabriquer une telle structure dissymétrique par soudage par diffusion et par formage superplastique.

### Etat de la technique

Sur les aéronefs existants, des bords de fuite des becs d'attaque des voilures sont fabriqués en assemblant plusieurs pièces par collage et par rivetage. Ces pièces comprennent généralement deux peaux externes destinées à former l'extrados et l'intrados du bord de fuite, une pièce terminale extrudée formant le bord de fuite proprement dit, un longeron à section en forme de U assurant la liaison entre les deux peaux externes à l'opposé du bord de fuite et une structure de remplissage en nid d'abeilles remplissant l'espace formé entre les pièces précédentes. Les peaux externes ainsi que la pièce terminale sont réalisées en alliage d'aluminium. Le longeron à section en forme de U est réalisé en matériau composite à base de carbone. Enfin, le matériau de remplissage en nid d'abeilles est généralement en aluminium.

Cette description montre que les techniques utilisées actuellement pour réaliser les bords de fuite des becs d'attaque des voilures sont particulièrement complexes et lourdes à mettre en oeuvre.

Par ailleurs, les propriétés superplastiques des métaux tels que les alliages à base de titane permettent de fabriquer dans ces matériaux des structures creuses et monoblocs en réalisant successivement un soudage par diffusion entre des tôles empilées, puis un formage superplastique de ces tôles.

Comme l'illustre à titre d'exemple le document US-A-5 344 063, ce procédé est généralement mis en oeuvre en différentes étapes nécessitant des outillages différents, et il est particulièrement adapté à la fabrication de pièces présentant une symétrie par rapport à un plan.

Comme l'illustre le document US-A-4 833 768, il est également connu de fabriquer par ce procédé des structures dissymétriques dont les deux peaux externes sont incurvées tout en restant sensiblement parallèles l'une à l'autre. En particulier, la structure incurvée dont la fabrication est décrite dans ce document comporte des renforts internes dont la section en forme de I est perpendiculaire aux peaux externes. Afin qu'il n'existe pas de décalages trop importants dans l'allongement des différentes tôles lors du formage superplastique, l'empilement de tôles est progressivement incurvé lors de la fermeture de l'outillage de formage, pour prendre une courbure moyenne proche de la courbure de la structure que l'on désire réaliser.

Dans ce document US-A-4 833 768, pour que le formage superplastique soit réalisé dans des conditions satisfaisantes, c'est-à-dire sans risque de plissement incontrôlé des tôles, celles-ci doivent être mises sous tension lors de la fermeture de l'outillage, ce qui impose de leur adjoindre des butées qui viennent en appui contre l'outillage peu avant sa fermeture complète. Cette procédure a pour inconvénient notable d'imposer un soudage des tôles, notamment dans les zones destinées à former les renforts internes, préalablement à la mise en place de l'empilement de tôles dans l'outillage.

Des inconvénients comparables se retrouvent dans le document US-A-5 330 092 (cf. le préambule de la revendication 1), qui propose de fabriquer une aile métallique creuse monobloc et dissymétrique à partir d'un empilement de tôles, en faisant précéder une opération de formage superplastique de la structure, dans un outillage adapté, d'une opération de soudage des différentes tôles entre elles effectuée à l'aide d'un laser, avant la mise en place de la structure dans l'outillage de formage.

Comme l'enseigne le document US-A-5 323 536, il est également connu de fabriquer une structure métallique creuse monobloc et dissymétrique telle qu'une pale de ventilateur à partir d'un empilement de tôles, en réalisant les soudures entre les tôles par soudage par diffusion, puis la mise en forme par formage superplastique. Cependant, le caractère dissymétrique de la structure à réaliser impose ici encore de faire précéder l'opération de formage superplastique d'une mise en forme préalable de l'empilement de tôles dans une machine appropriée. Le soudage par diffusion doit alors être impérativement effectué avant cette mise en forme de l'empilement, afin que le positionnement relatif entre les tôles soit satisfaisant lors du formage superplastique. Comme les autres procédés de fabrication de structures dissymétriques, ce procédé présente donc également l'inconvénient de ne pas permettre la réalisation du soudage par diffusion et du formage superplastique dans le même outillage, sans ouverture de celui-ci.

### Exposé de l'invention

L'invention a pour premier objet une structure métallique creuse monobloc et dissymétrique susceptible d'être fabriquée dans un même outillage, sans ouverture de celui-ci, par soudage par diffusion puis formage superplastique.

L'invention a aussi pour deuxième objet un procédé de fabrication d'une telle structure.

Conformément à l'invention, le premier de ces objets est atteint au moyen d'une structure métallique creuse, monobloc et dissymétrique, caractérisée par le fait qu'elle comprend :
- deux peaux externes de courbures sensiblement différentes liées l'une à l'autre par un bord et s'éloignant progressivement l'une de l'autre à partir de ce bord ; et
- des renforts internes délimitant plusieurs paires d'alvéoles fermées entre les deux peaux externes, les alvéoles de chaque paire étant séparées par une cloison médiane disposée entre les deux peaux externes, et délimitées par des cloisons de liaison qui relient la cloison médiane à chacune des peaux externes.

Dans une forme de réalisation préférentielle de l'invention, chaque paire d'alvéoles présente un plan de symétrie sensiblement perpendiculaire au bord précité, les plans de symétrie des paires d'alvéoles étant régulièrement espacés de telle sorte que les alvéoles soient disposées côte à côte dans le sens de la corde dudit bord. Cette caractéristique donne à la structure une raideur particulièrement élevée.

Les alvéoles sont alors, de préférence, allongées dans leur plan de symétrie et présentent une largeur moindre dans la direction parallèle au bord de la structure.

Dans cette forme de réalisation préférée de l'invention, la cloison de liaison de chaque alvéole est inclinée selon un angle compris entre environ 30° et environ 35°, par rapport à la peau externe sur laquelle cette cloison de liaison est raccordée, de telle sorte que l'alvéole présente une section parallèlement à cette peau, qui diminue jusqu'à la cloison interne.

Dans leurs parties extérieures aux alvéoles, les peaux externes comportent avantageusement une plus forte épaisseur que dans leurs parties délimitant les alvéoles et que les cloisons médianes et les cloisons de liaison.

Dans une application privilégiée de l'invention, la structure constitue au moins un tronçon du bord de fuite d'un bec d'attaque d'une voilure d'aéronef.

Le second objet de l'invention est atteint au moyen d'un procédé de fabrication d'une structure métallique creuse monobloc, par soudage par diffusion et formage superplastique, comprenant les étapes suivantes :
- préparation de tôles destinées à former deux peaux externes et des renforts internes de la structure, en vue de délimiter des zones à souder sur les surfaces en vis-à-vis de ces tôles ;
- mise en place des tôles empilées dans un outillage de soudage et de formage, et fermeture de cet outillage par pincement de rebords périphériques des tôles ;
- chauffage et application d'une première pression dans l'outillage de part et d'autre des tôles empilées, pour en effectuer le soudage par diffusion ;
- suppression de la première pression et application d'une deuxième pression entre les tôles formant les peaux externes et les tôles formant les renforts internes, pour effectuer le formage superplastique ;
- refroidissement, ouverture de l'outillage, et usinage de la structure obtenue,
caractérisé par le fait que, la structure à fabriquer étant dissymétrique et comportant deux peaux externes de courbures sensiblement différentes, qui se rejoignent selon un bord, s'éloignent progressivement l'une de l'autre à partir de ce bord, et sont formées chacune d'au moins deux tôles dans des régions de la structure dépourvues de renforts internes, la mise en place des tôles empilées dans l'outillage est précédée des étapes suivantes :
- réduction de l'épaisseur de premières tôles destinées à former la peau externe de plus forte courbure, du côté tourné vers de deuxième tôles destinées à former la peau externe de plus faible courbure, dans une région destinée à être éliminée par usinage après le formage, par découpe d'une pièce dans au moins une des premières tôles, parallèlement au bord de la structure à fabriquer ;
- augmentation de l'épaisseur des deuxièmes tôles par ajout de ladite pièce du côté tourné vers les premières tôles, de telle sorte que ladite pièce remplit précisément ladite découpe lors de la mise en place des tôles dans l'outillage.

De préférence, chacune des peaux externes étant formée d'au moins trois tôles dans les régions dépourvues de renforts, on découpe alors une pièce dans les deux premières tôles tournées vers les deuxièmes tôles, la largeur de la pièce découpée dans la première tôle la plus éloignée des deuxièmes tôles étant plus petite que celle de la pièce découpée dans la première tôle la plus proche des deuxièmes tôles.

### Brève description des dessins

On décrira à présent, à titre d'exemple non limitatif une forme de réalisation préférentielle de l'invention, en se référant aux dessins annexés, dans lesquels :
- la figure 1 est une vue en coupe transversale représentant de façon schématique l'avant d'une voilure d'aéronef équipée un bec d'attaque de voilure d'aéronef ;
- la figure 2 est une vue en coupe transversale représentant à plus grande échelle le bord de fuite du bec d'attaque de la figure 1, constitué par une structure métallique creuse, monobloc et dissymétrique réalisée conformément à l'invention ;
- la figure 3 est une section selon la ligne III-III de la figure 2 ;
- la figure 4 est une vue en perspective et en coupe représentant un outillage dans lequel on a placé un empilement de tôles en vue de fabriquer le bord de fuite illustré sur les figures 2 et 3, par des opérations de soudage par diffusion et de formage superplastique réalisées consécutivement sans ouverture de l'outillage ;
- la figure 5 est une vue en coupe illustrant plus en détail l'empilement de tôles placé dans l'outillage, conformément au procédé de fabrication selon l'invention ;
- la figure 6A représente à plus grande échelle l'allure prise par une région de l'empilement de tôles extérieure à la pièce à fabriquer, lors du soudage par diffusion, si les tôles ne sont pas totalement préparées conformément à l'invention ;
- la figure 6B représente à plus grande échelle l'allure prise par la même région de l'empilement de tôles lorsque les tôles sont parfaitement préparées conformément à l'invention ;
- la figure 7 est une vue en coupe comparable à la figure 5 représentant la forme prise par la pièce à l'intérieur de l'outillage, à la fin du formage superplastique ; et
- la figure 8 représente en coupe transversale la structure métallique creuse, monobloc et dissymétrique obtenue par le formage superplastique, avant que cette structure ne soit usinée afin d'obtenir le bord de fuite des figures 2 et 3.

### Exposé détaillé d'un mode de réalisation

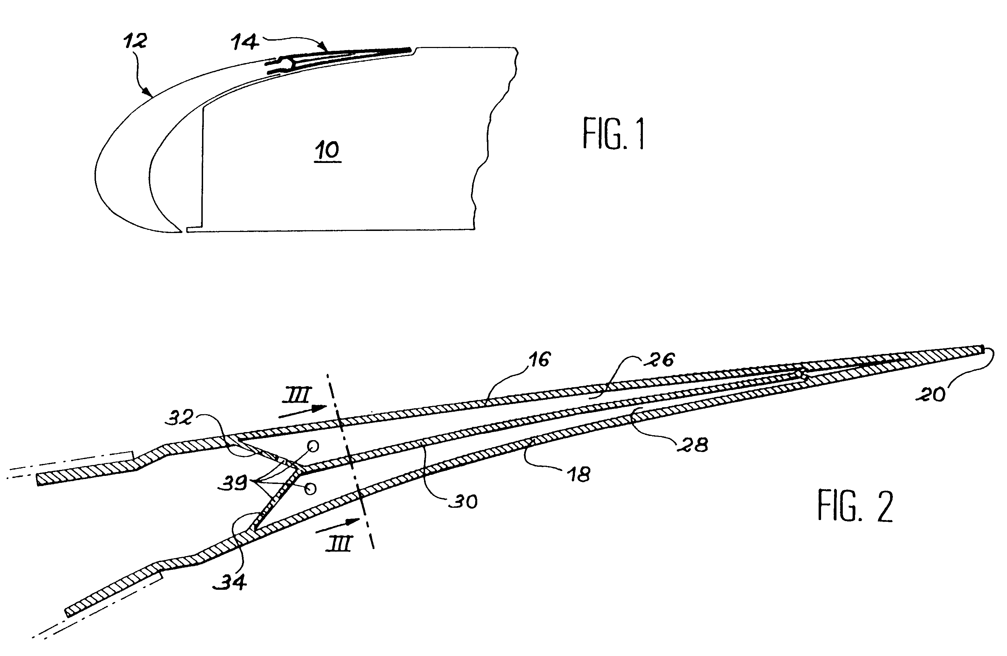

Sur la figure 1, on a représenté de façon très schématique la partie avant d'une voilure d'aéronef, désignée par la référence 10. De façon classique, cette voilure 10 est équipée à l'avant d'un bec d'attaque 12. Ce bec d'attaque 12 est monté sur la voilure 10 par un mécanisme permettant d'en modifier la position, selon la phase du vol dans laquelle on se trouve. Dans un souci de clarté, ce mécanisme n'a pas été illustré sur la figure 1.

Le bec d'attaque 12 comporte de façon classique un bord d'attaque arrondi et un bord de fuite 14 effilé qui lui donne en section une forme comparable à celle d'un cliquet ou d'une virgule.

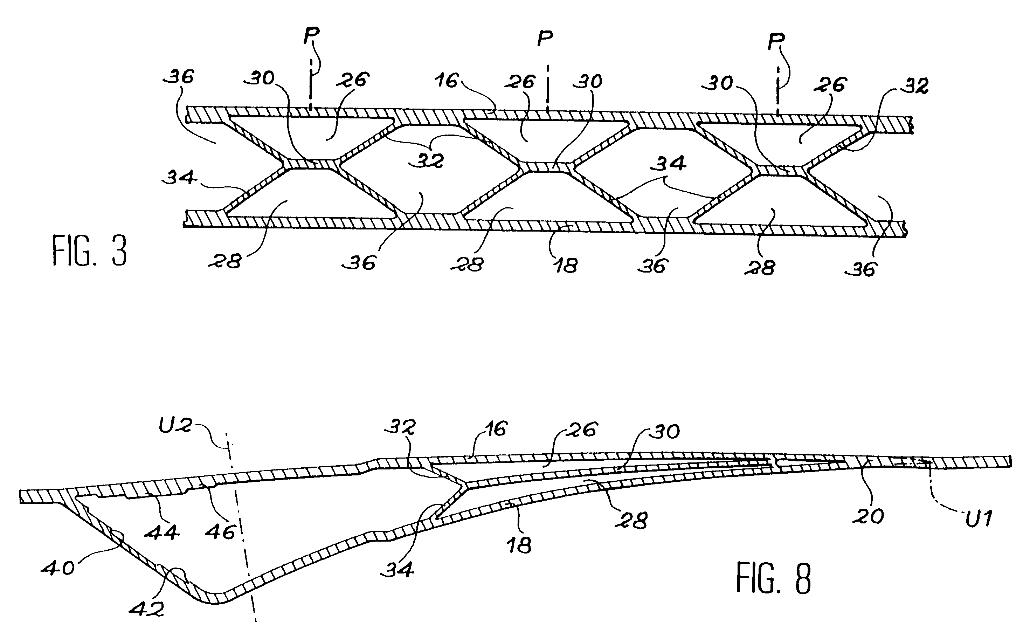

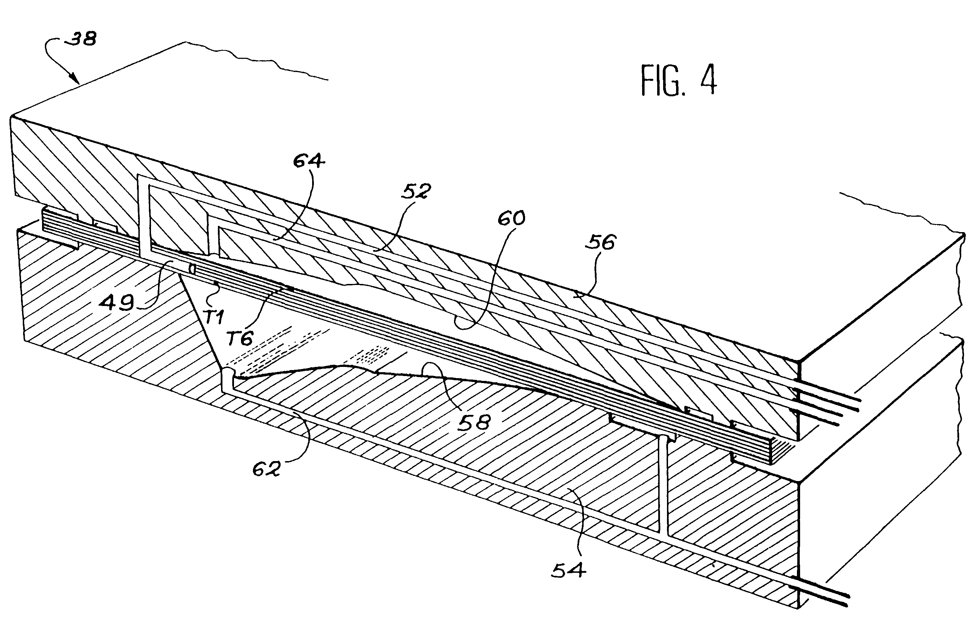

Conformément à l'invention, il est proposé de réaliser le bord de fuite 14 du bec d'attaque 12 sous la forme d'une structure métallique creuse et monobloc. Cette structure va tout d'abord être décrite en détail en se référant aux figures 2 et 3. On en décrira ensuite la fabrication en se référant aux figures 4 à 8.

Avant de décrire en détail la structure métallique creuse et monobloc constituant le bord de fuite 14, on observera que ce dernier peut être constitué selon le cas soit d'une structure unique, soit d'au moins deux structures semblables solidarisées bout à bout, par exemple par rivetage, si la longueur du bec d'attaque 12 est trop importante pour permettre la fabrication du bord de fuite 14 d'un seul tenant.

Comme l'illustrent les figures 2 et 3, la structure métallique creuse et monobloc conforme à l'invention est dissymétrique et comporte deux peaux externes 16 et 18, de courbures différentes, liées l'une à l'autre par un bord 20, sensiblement rectiligne, qui constitue le bord de fuite proprement dit du bec d'attaque. Plus précisément, la peau externe supérieure 16 est convexe et de faible courbure, alors que la peau externe inférieure 18 est concave et de plus forte courbure. La peau externe supérieure 16 forme l'extrados du bord de fuite 14, alors que la peau externe inférieur 18 en forme l'intrados.

A partir du bord 20, les peaux externes 16 et 18 s'éloignent progressivement l'une de l'autre, de telle sorte que la structure et ouverte vers l'avant, dans sa partie prévue pour être raccordée sur la structure constituant le bec d'attaque 12 proprement dit.

En plus des deux peaux externes 16 et 18, la structure métallique creuse et monobloc constituant le bord de fuite 14 comporte des renforts internes délimitant entre les deux peaux des paires d'alvéoles supérieure 26 et inférieure 28 fermées par des cloisons dans toutes les directions. Plus précisément, chacune des alvéoles supérieures 26 est formée entre la peau externe convexe 16 et une cloison médiane 30, disposée sensiblement à égale distance entre les peaux 16 et 18 au droit de chacune des paires d'alvéoles 26 et 28. Chaque alvéole inférieure 28 est formée quant à elle entre la cloison médiane 30 et la peau externe concave 18.

Par ailleurs, chacune des alvéoles supérieures 26 est délimitée à sa périphérie par une cloison de liaison 32 reliant la cloison médiane 30 correspondante à la peau externe convexe 16 et chacune des alvéoles inférieures 28 est délimitée à sa périphérie par une cloison de liaison 34 reliant la cloison médiane 30 correspondante à la peau externe concave 18.

Chacune des paires d'alvéoles 26 et 28 présente un plan de symétrie P (figure 3) sensiblement perpendiculaire au bord 20 et parallèle au plan de la figure 2. Comme l'illustre en particulier la figure 3, les plans de symétrie des différentes paires d'alvéoles 26 et 28 sont régulièrement espacés, de telle sorte que les alvéoles sont disposées côte à côte dans le sens de la corde du bord 20. En outre, la figure 2 montre que les alvéoles 26 et 28 sont allongées dans leur plan de symétrie, de telle sorte que chacune des paires d'alvéoles 26 et 28 commence à proximité du bord 20 et se prolonge vers l'avant. Les alvéoles 26 et 28 sont prévues sur la majeure partie de la longueur du bord de fuite 14. En revanche, on voit sur la figure 3 que les alvéoles 26 et 28 présentent une largeur réduite dans le sens de la corde du bord 20.

Par ailleurs, les cloisons de liaison 32 et 34 sont inclinées par rapport aux peaux externes 16 et 18, de telle sorte que la section de chacune des alvéoles 26 et 28 diminue progressivement en allant vers la cloison médiane 30. Cette inclinaison des cloisons de liaison 32 et 34 est telle que l'angle qu'elles forment respectivement avec les peaux externes 16 et 18 sur lesquelles elles sont raccordées est compris entre environ 30° et environ 35°. De façon plus précise, l'angle formé entre ces cloisons de liaison 32 et 34 et les peaux externes 16 et 18 est sensiblement égal à 30° à l'avant et à l'arrière de chacune des alvéoles 26 et 28, c'est-à-dire en section selon le plan médian P de ces alvéoles. Par ailleurs, cet angle est d'environ 35° sur les côtés des alvéoles 26 et 28, c'est-à-dire en section selon un plan parallèle au bord 20.

L'agencement qui vient d'être défini permet de former entre chaque paire d'alvéoles 26 et 28 consécutives une alvéole intermédiaire 36, ouverte vers l'avant et vers l'arrière, qui présente en section parallèlement au bord 20 une forme sensiblement hexagonale, comme l'illustre la figure 3. Cette dernière figure montre également que la largeur de ces alvéoles intermédiaires 36 au niveau des cloisons médianes 30 est sensiblement égale à la largeur maximale des alvéoles 26 et 28, respectivement au niveau des peaux externes convexes 16 et concaves 18. Les renforts internes formés entre les peaux externes 16 et 18 présentent ainsi une configuration sensiblement en X selon une section parallèle au bord 20.

Pour une raison qui apparaîtra par la suite et qui découle de la fabrication de la structure illustrée sur les figures 2 et 3, l'épaisseur des peaux externes 16 et 18 dans les parties de ces peaux qui ne servent pas à délimiter les alvéoles 26 et 28 est supérieure à l'épaisseur de ces mêmes peaux au droit des alvéoles 26 et 28. De plus, l'épaisseur des peaux externes 16 et 18 à l'extérieur des alvéoles 26 et 28 est également supérieure à l'épaisseur des cloisons médianes 30 et à l'épaisseur des cloisons de liaison 32 et 34.

Le métal dans lequel est réalisé la structure creuse et monobloc qui vient d'être décrite peut être constitué par tout métal susceptible de subir un formage superplastique. Dans la pratique, un tel métal est généralement un alliage à base de titane tel que l'alliage TA6V.

On décrira à présent en se référant aux figures 4 à 8 un procédé de fabrication d'une telle structure, mettant en oeuvre successivement un soudage par diffusion et un formage superplastique dans un même outillage, sans ouverture de celui-ci.

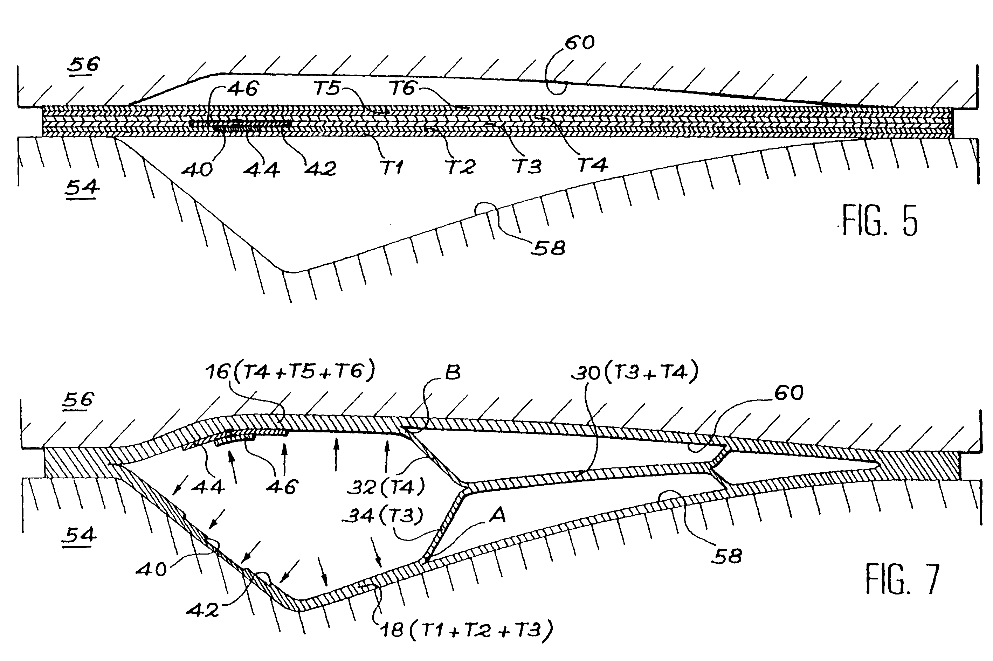

La mise en oeuvre de ce procédé permet de réaliser la structure désirée à partir d'un empilement de tôles. Dans l'exemple décrit, cet empilement comprend six tôles T1 à T6 (figure 5) dont trois (T1 à T3) formeront la peau externe concave 18 et dont trois (T4 à T6) formeront la peau externe convexe 16, dans les régions de ces peaux situées à l'extérieur des alvéoles 26 et 28. A l'emplacement des alvéoles 26 et 28, les deux tôles centrales T3 et T4 seront dissociées des autres et soudées l'une à l'autre pour former la cloison médiane 30 ainsi que chacune des cloisons de liaison 32 et 34.

Avant d'être placées dans l'outillage désigné de façon générale par la référence 38 sur la figure 4, les différentes tôles T1 à T6 doivent subir au préalable un certain nombre d'opérations préparatoires. Ces opérations préparatoires comportent des opérations classiques dans le cas du soudage par diffusion comme dans le cas du formage superplastique, ainsi que des opérations originales, conformes à l'invention, visant à permettre la réalisation de ces deux opérations dans le même outillage 38, sans ouverture de celui-ci, en dépit du caractère dissymétrique de la structure à fabriquer.

Du fait que la première série d'opérations préparatoires est classique, elle ne sera décrite ici que brièvement, dans le simple but de faciliter la compréhension. Pour une description plus détaillée on se reportera utilement aux nombreuses publications relatives à ces techniques, ainsi qu'au document US-A-5 323 536.

Ces opérations préparatoires connues comportent tout d'abord des opérations d'usinage au cours desquelles des découpes sont réalisées dans les tôles, par exemple au moyen d'un laser. Outre le détourage des tôles, ces opérations comprennent le perçage de trous d'alimentation 39 (figure 2) dans les régions des deux tôles centrales T3 et T4 destiné à former les cloisons de liaison 32 et 34 de la structure. Ces trous d'alimentation permettront au gaz sous pression de pénétrer dans les alvéoles 26 et 28 lors du formage superplastique.

Les opérations préparatoires connues effectuées sur les tôles T1 à T6 avant leur mise en place dans l'outillage 38 de la figure 4 comportent également un certain nombre d'opérations de préparation des surfaces des tôles visant à délimiter les régions de ces surfaces dans lesquelles un soudage par diffusion doit être effectué. Après une préparation de la surface des tôles par exemple sous la forme d'un dégraissage alcalin suivi d'un décapage fluonitrique, toutes les surfaces des tôles sont tout d'abord revêtues d'un masque au trempé dans un bain de polyuréthane protégeant la surface décapée des pollutions extérieures. L'emplacement des zones de soudage est ensuite délimité par une gravure laser des masques. Les zones à ne pas souder sont alors démasquées, puis revêtues au pistolet d'un anti-diffusant tel que du nitrure de bore. Enfin, les parties restantes des masques sont enlevées.

Conformément à l'invention, ces opérations préparatoires classiques sont complétées par des opérations complémentaires originales destinées à permettre la réalisation de la structure par soudage par diffusion, puis formage superplastique dans l'outillage 38 sans ouverture de celui-ci, en dépit de la forme dissymétrique de la structure que l'on désire réaliser.

Ces opérations originales sont effectuées sur des parties des tôles que seront éliminées lors de l'usinage effectué après le formage, afin d'obtenir la structure désirée. Plus précisément, elles concernent les parties des tôles qui sont situées après le formage dans le prolongement de l'extrémité avant ouverte de la structure 14.

En premier lieu, on réduit l'épaisseur des tôles destinées à former la peau externe concave 18, au-delà de l'extrémité avant de cette peau externe concave, en réalisant parallèlement au bord 20 une découpe rectangulaire dans les tôles T2 et T3 qui font face aux tôles T4 à T6 destinées à former la peau externe convexe 16.

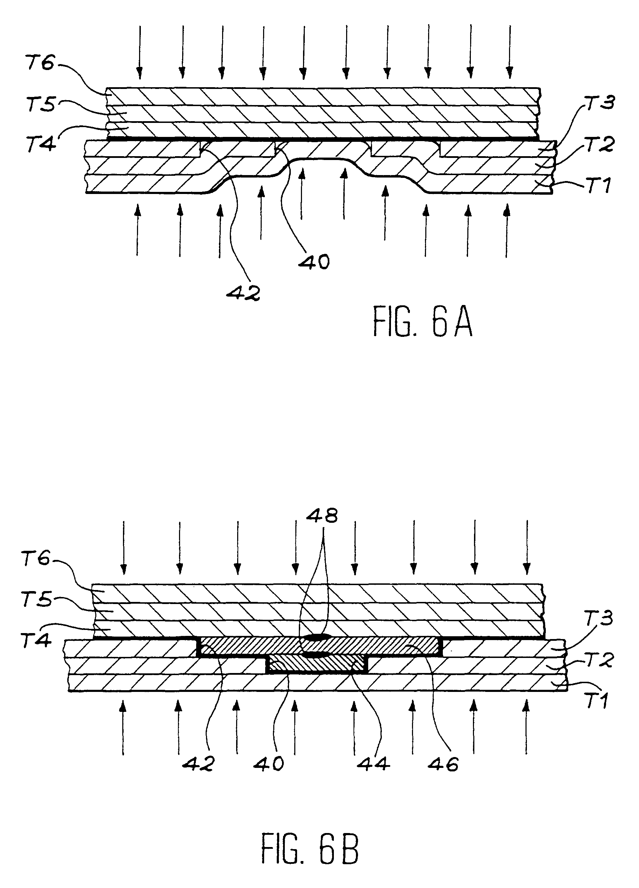

Plus précisément et comme l'illustrent les figures 5 et 6B, on réalise dans la tôle intermédiaire T2 une première découpe rectangulaire 40 relativement étroite et dans la tôle interne T3 une découpe 42 de plus grande largeur.

En outre et comme l'illustrent également les figures 5 et 6B, les pièces 44 et 46 obtenues lors de la réalisation des découpes 40 et 42 respectivement dans les tôles T2 et T3 sont placées sur la face de la tôle T4 tournée vers la tôle T3, en un emplacement correspondant exactement avec les découpes 40 et 42 formées dans les tôles T2 et T3 lorsque les tôles sont empilées. Par conséquent, les pièces 44 et 46 remplissent précisément les découpes 40 et 42 lorsque les tôles T1 à T6 sont empilées avant d'être introduites dans l'outillage 38.

Pour assurer le maintien en position des pièces 44 et 46 respectivement sur la pièce 46 et sur la tôle T4, on réalise quelques points de soudure 48 comme l'illustre également la figure 6B.

Lorsque toutes ces opérations préparatoires sont terminées, l'empilement de tôles T1 à T6 est placé dans l'outillage 38 comme l'illustre schématiquement la figure 4. Des aiguilles 49 de passage de gaz sont alors placées dans l'empilement de tôles, entre les tôles T3 et T4, pour permettre l'alimentation en gaz des différentes régions de l'empilement qui doivent être mises sous pression lors du formage superplastique. Ces aiguilles 50 sont reliées par des canaux 52 de l'outillage 38 à une source de pression extérieure (non représentée).

Comme l'illustre la figure 4, l'outillage 38 comprend essentiellement deux matrices 54 et 56 dont les bords périphériques permettent de pincer de façon étanche les bords périphériques de l'empilement de tôles T1 à T6. Chacune des matrices 54 et 56 comporte à l'intérieur de ces bords périphériques une empreinte en creux 58 et 60. Une partie de l'empreinte en creux 58 définit la forme de l'intrados 24 de la structure à réaliser, alors qu'une partie de l'empreinte en creux 60 définit la forme de l'extrados 22 de cette structure. Chacune des matrices 54 et 56 comporte en outre ' des canaux 62 et 64 débouchant respectivement dans les empreintes en creux 58 et 60 et susceptibles d'être reliés simultanément à une source de pression extérieure ou mis à l'atmosphère.

Lorsque l'outillage 38 est fermé sur l'empilement de tôles T1 à T6, la température est élevée jusqu'à une valeur voisine par exemple de 930°C, à l'aide de moyens de chauffage (non représentés) qui peuvent être intégrés à l'outillage 38 ou situés à l'extérieur de celui-ci.

Lorsque la température souhaitée est atteinte, le soudage par diffusion est réalisé en appliquant de part et d'autre de l'empilement de tôles T1 à T6 une pression suffisante pour réaliser le soudage des tôles dans les zones non recouvertes d'anti-diffusant. Cette pression, qui peut notamment être d'environ huit bars, est assurée par l'admission de gaz comprimé dans les empreintes en creux 58 et 60 par les passages 62 et 64.

Après une période d'application de pression d'une durée suffisante pour assurer le soudage des tôles par diffusion, par exemple environ 5 heures, on effectue directement le formage superplastique de la structure sans ouvrir l'outillage 38. A cet effet, on supprime la pression appliquée de part et d'autre de l'empilement de tôles, en reliant les passages 62 et 64 à l'atmosphère, puis on applique par les passages 52 la pression de formage nécessaire, selon un cycle prédéterminé. Les caractéristiques du cycle de pression appliqué par ces passage 52 sont déterminées de façon connue par l'homme du métier selon les formes et les dimensions de la structure à fabriquer et en fonction de la nature du matériau superplastique utilisé. De préférence le cycle est supervisé par un microprocesseur permettant le pilotage des paramètres et la visualisation des anomalies éventuelles.

La figure 5 illustre la position des tôles T1 à T6 dans l'outillage 38, avant l'application de la pression permettant le soudage par diffusion. La figure 7 illustre quant à elle l'état de la structure à la fin du formage superplastique.

En l'absence des découpes 40 et 42 dans les tôles T2 et T3, des essais ont montré que l'opération de formage superplastique avait pour conséquence une déchirure de toutes les cloisons de liaison 34 dans leur partie tournée vers l'avant de la structure à réaliser, c'est-à-dire vers la gauche en considérant les figures 2 et 7. Cette rupture avait pour origine un allongement différentiel important des tôles formant les peaux externes 16 et 18 dû au caractère dissymétrique de la structure à réaliser. Plus précisément, cette dissymétrie se traduisait lors du formage superplastique par un allongement sensiblement plus important des trois tôles T1 à T3 formant la peau externe concave 18 par rapport à l'allongement des trois tôles T4 à T6 formant la peau externe convexe 16. Cet allongement différentiel se traduisait dans ce cas par un déplacement vers la gauche de la zone A (figure 7) de rattachement de l'avant de la cloison de liaison 34 sur la peau externe concave 18 sensiblement plus important que le déplacement comparable de la zone B de rattachement de l'avant de la cloison de liaison 32 sur la peau externe convexe 16. Le demandeur a établi que la déchirure systématique des parties avant des cloisons de liaison 34 constatée lors des essais précités était la conséquence directe de ce déplacement différentiel.

Pour remédier à cet inconvénient, il est proposé en premier lieu de rendre les déplacements des zones A et B de rattachement des parties avant des cloisons de liaison 34 et 32 sur leurs peaux respectives 18 et 16 sensiblement identiques lors du formage. Pour cela on localise la partie excédaire de l'allongement des trois tôles T1 à T3 formant la peau externe concave 18 dans une région située à l'extérieur de la structure à réaliser, c'est-à-dire dans la partie de ces tôles situées au-delà du bord avant de la peau externe concave 18. Ce résultat est obtenu grâce aux découpes 40 et 42 formées à cet endroit dans les tôles T2 et T3.

Des essais de formage effectués selon ce principe mais sans utiliser les pièces 44 et 46 formées lors de la réalisation des découpes 40 et 42 ont conduit à des résultats peu satisfaisants. En effet, il se produisait alors, lors du formage, une rupture de la tôle T1 au droit des découpes 40 et 42.

Le demandeur a établi que cette rupture avait pour origine un poinçonnage de cette tôle T1 lors de l'opération de soudage par diffusion. Ce poinçonnage résultait de la pénétration de la tôle T1 dans les découpes 40 et 42 qui se produisait alors sous l'effet de la pression appliquée sur les deux faces de l'empilement de tôles, lors du soudage. Cet effet de poinçonnage est illustré sur la figure 6A.

Pour remédier à cet inconvénient, le demandeur a donc imaginé de monter sur la face interne de la tôle T4 les pièces 44 et 46, en les immobilisant à l'aide des points de soudure 48, comme on l'a décrit précédemment en se référant à la figure 6B. Grâce à cette caractéristique, il ne se produit aucun poinçonnage lorsque la pression de soudage est appliquée sur l'empilement de tôles au cours de l'étape de soudage par diffusion. L'opération ultérieure de formage superplastique s'effectue alors sans rupture de la tôle T1, de telle sorte que la mise en forme et l'allongement des tôles formant la peau externe concave 18 peuvent être assurés de façon parfaitement contrôlée. Les essais effectués dans ces conditions ont confirmé qu'il ne se produisait alors aucune rupture des cloisons de liaison 34 et qu'une pièce conforme à la structure décrite précédemment en se référant aux figures 2 et 3 était bien obtenue.

La figure 8 illustre l'état de la pièce monobloc obtenue après refroidissement jusqu'à environ 700°C et démoulage. Un usinage ultérieur, par exemple par découpe laser, permet d'assurer le détourage de la pièce obtenue afin de lui donner la configuration exacte de la structure illustrée sur les figures 2 et 3. Cet usinage, illustré sur la figure 8 par les traits mixtes U1 et U2, respectivement pour le bord de fuite 20 et les extrémités avant des peaux 16 et 18, concerne également les extrémités latérales de la structure. Il est à noter que cette opération d'usinage permet d'éliminer les parties de la pièce obtenue après démoulage comportant les découpes 40 et 42 et comportant les pièces 44 et 46.

Bien entendu, on comprendra que l'invention n'est pas limitée à la réalisation du bord de fuite d'un bec d'attaque de voilure d'aéronef et concerne toute structure métallique creuse et dissymétrique susceptible d'être fabriquée par soudage par diffusion et formage superplastique à partir d'un empilement de tôles.

## Revendications

1. Structure métallique creuse, monobloc et dissymétrique, comprenant
- deux peaux externes (16,18) de courbures sensiblement différentes liées l'une à l'autre par un bord (20) et s'éloignant progressivement l'une de l'autre à partir de ce bord ; **caractérisée par le fait que** la structure comprend :
- des renforts internes délimitant plusieurs paires d'alvéoles fermées (26,28) entre les deux peaux externes (16, 18), les alvéoles de chaque paire étant séparées par une cloison médiane (30) disposée entre les deux peaux externes, et délimitées par des cloisons de liaison (32,34) qui relient la cloison médiane (30) à chacune des peaux externes (16,18).

2. Structure selon la revendication 1, **caractérisée par le fait que** chaque paire d'alvéoles (26,28) présente un plan de symétrie (P) sensiblement perpendiculaire au bord (20) de la structure, les plans de symétrie desdites paires d'alvéoles étant régulièrement espacés de telle sorte que les alvéoles (26,28) soient disposées côte à côte dans le sens de la corde dudit bord (20).

3. Structure selon la revendication 2, **caractérisé par le fait que** les alvéoles (26,28) sont allongées dans leur plan de symétrie (P) et présentent une largeur moindre dans ladite direction.

4. Structure selon l'une quelconque des revendications précédentes, **caractérisé par le fait que** la cloison de liaison (32,34) de chaque alvéole (26,28) est inclinée selon un angle compris entre environ 30° et environ 35°, par rapport à la peau externe (16,18) sur laquelle cette cloison de liaison est raccordée, de telle sorte que l'alvéole présente une section parallèlement à cette peau, qui diminue jusqu'à la cloison médiane (30).

5. Structure selon l'une quelconque des revendications précédentes, **caractérisée par le fait que** les peaux externes (16,18) comportent dans leurs parties extérieures aux alvéoles (26,28) une plus forte épaisseur que dans leurs parties délimitant les alvéoles et que les cloisons médianes (30) et les cloisons de liaison (32,34).

6. Structure selon l'une quelconque des revendications précédentes, **caractérisée par le fait que** les deux peaux externes comportent une peau convexe (16) et une peau concave (18), la cloison médiane (30) étant disposée sensiblement à égale distance entre ces deux peaux.

7. Structure selon l'une quelconque des revendications précédentes, **caractérisée par le fait qu'**elle constitue au moins un tronçon de bord de fuite (14) d'un bec d'attaque (12) d'une voilure (10) d'aéronef.

8. Procédé de fabrication d'une structure métallique creuse monobloc, par soudage par diffusion et formage superplastique, comprenant les étapes suivantes :
- préparation de tôles (T1 à T6) destinées à former deux peaux externes (16,18) et des renforts internes de la structure, en vue de délimiter des zones à souder sur les surfaces en vis-à-vis de ces tôles ;
- mise en place des tôles empilées dans un outillage de soudage et de formage (38), et fermeture de cet outillage par pincement de rebords périphériques des tôles (T1 à T6) ;
- chauffage et application d'une première pression dans l'outillage (38) de part et d'autre des tôles empilées, pour en effectuer le soudage par diffusion ;
- suppression de la première pression et application d'une deuxième pression entre les tôles formant les peaux externes et les tôles formant les renforts internes, pour effectuer le formage superplastique ;
- refroidissement, ouverture de l'outillage, et usinage de la structure obtenue,
**caractérisé par** le fait, la structure à fabriquer étant dissymétrique et comportant deux peaux externes de courbures sensiblement différentes, qui se rejoignent selon un bord, s'éloignent progressivement l'une de l'autre à partir de ce bord et sont formées chacune d'au moins deux tôles (T1 à T3, T4 à T6) dans des régions de la structure dépourvues de renforts internes, la mise en place des tôles empilées dans l'outillage (38) est précédée des étapes suivantes :
- réduction de l'épaisseur de premières tôles (T1 à T3) destinées à former la peau externe (18) de plus forte courbure, du côté tourné vers des deuxièmes tôles destinées à former la peau externe (16) de plus faible courbure, dans une région destinée à être éliminée par usinage après le formage, par découpe (40,42) d'une pièce (44,46) dans au moins une (T2,3) des premières tôles, parallèlement au bord (20) de la structure à fabriquer ;
- augmentation de l'épaisseur des deuxièmes tôles (R4 à 76) par ajout de ladite pièce (44,46) du côté tourné vers les premières tôles, de telle sorte que ladite pièce remplit précisément ladite découpe (40,42) lors de la mise en place des tôles (T1 à T6) dans l'outillage.

9. Procédé selon la revendication 8, **caractérisé par le fait que**, chacune des peaux externes (16,18) étant formée d'au moins trois tôles (T1 à T3, T4 à T6) dans les régions dépourvues de renforts, on découpe une pièce (44,46) dans les deux premières tôles (T2,T3) tournées vers les deuxièmes tôles (T4 à T6), la largeur de la pièce (44) découpée dans la première tôle (T2) la plus éloignée des deuxièmes tôles étant plus petite que celle de la pièce (46) découpée dans la première tôle (T3) la plus proche des deuxièmes tôles.

## Patentansprüche

1. Hohle, einstückige und asymmetrische Metallstruktur mit:
zwei Außenhäuten (16,18) mit merklich unterschiedlichen Krümmungen, die durch einen Rand (20) miteinander verbunden sind und sich von diesem Rand aus zunehmend voneinander entfernen,
**dadurch gekennzeichnet, daß** die Struktur umfaßt:
innere Verstärkungen, die mehrere geschlossene Zellenpaare (26,28) zwischen den zwei Außenhäuten (16,18) abgrenzen, wobei die Zellen jedes Paars durch eine zwischen den beiden Außenhäuten angeordnete Mittelwand (30) abgetrennt und durch Verbindungswände (32,34), welche die Mittelwand (30) mit jeder der Außenhäute (16,18) verbinden, begrenzt sind.

2. Struktur gemäß Anspruch 1, **dadurch gekennzeichnet, daß** jedes Zellenpaar (26,28) eine Symmetrieebene (P) im wesentlichen senkrecht zum Rand (20) der Struktur aufweist, wobei die Symmetrieebenen der Zellenpaare regelmäßig derart beabstandet sind, daß die Zellen (26,28) nebeneinander in Richtung der Spannweite des Randes (20) angeordnet sind.

3. Struktur gemäß Anspruch 2, **dadurch gekennzeichnet, daß** die Zellen (26,28) in ihrer Symmetrieebene (P) langgestreckt sind und in der genannten Richtung eine geringere Breite aufweisen.

4. Struktur gemäß einem der vorangehenden Ansprüche, **dadurch gekennzeichnet, daß** die Verbindungswand (32,34) jeder Zelle (26,28) unter einem zwischen ca. 30° und ca. 35° gelegenen Winkel bezüglich der Außenhaut (16,18), mit der diese Verbindungswand verbunden ist, geneigt ist, so daß die Zelle einen Abschnitt parallel zu dieser Haut aufweist, der sich bis zur Mittelwand (30) hin verjüngt.

5. Struktur gemäß einem der vorangehenden Ansprüche, **dadurch gekennzeichnet, daß** die Außenhäute (16,18) in ihren gegenüber den Zellen (26,28) äußeren Abschnitten eine größere Dicke als in ihren die Zellen umgrenzenden Abschnitten und als die Mittelwände (30) und die Verbindungswände (32,34) aufweisen.

6. Struktur gemäß einem der vorangehenden Ansprüche, **dadurch gekennzeichnet, daß** die zwei Außenhäute eine konvexe (16) und eine konkave (18) Haut umfassen, wobei die Mittelwand (30) im wesentlichen in gleichem Abstand zwischen diesen zwei Häuten angeordnet ist.

7. Struktur gemäß einem der vorangehenden Ansprüche, **dadurch gekennzeichnet, daß** sie mindestens ein Luftauslaßschlitz-Teilstück (14) einer Flügelvorderkante (12) eines Luftfahrzeug-Tragflügels (10) darstellt.

8. Verfahren zur Herstellung einer hohlen, einstückigen Metallstruktur durch Diffusionsschweißen und superplastisches Formen, mit folgenden Schritten:
Vorbereiten der zum Formen der zwei Außenhäute (16,18) und der inneren Verstärkungen der Struktur bestimmten Bleche (T1 bis T6), um zu schweißende Zonen auf den gegenüberliegenden Oberflächen dieser Bleche abzugrenzen,
- Einsetzen der gestapelten Bleche in ein Schweiß- und Formwerkzeuganordnung (38) und Schließen dieser Werkzeuganordnung durch Festklemmen der Umfangsränder der Bleche (T1 bis T6),
- Erwärmen und Aufbringen eines ersten Drucks in der Werkzeuganordnung (38) auf beiden Seiten der gestapelten Bleche, um die Diffusionsschweißung auszuführen,
- Aufheben des ersten Drucks und Aufbringen eines zweiten Drucks zwischen den die Außenhäute bildenden Blechen und den die inneren Verstärkungen bildenden Blechen, um das superplastische Formen auszuführen,
- Abkühlen, Öffnen der Werkzeuganordnung und mechanisches Bearbeiten der erhaltenen Struktur,
**dadurch gekennzeichnet, daß** die herzustellende Struktur asymmetrisch ist und zwei Außenhäute mit merklich unterschiedlichen Krümmungen aufweist, die sich längs eines Randes verbinden, sich von diesem Rand aus zunehmend voneinander entfernen und jeweils mindestens aus zwei Blechen (T1 bis T3, T4 bis T6) in Bereichen der Struktur, die keine inneren Verstärkungen aufweisen, gebildet sind, wobei dem Einsetzen der in der Werkzeuganordnung (38) gestapelten Bleche folgende Schritte vorausgehen:
- Reduzieren der Dicke von ersten Blechen (T1 bis T3), die zur Bildung der Außenhaut (18) mit stärkerer Krümmung bestimmt sind, auf der den zweiten Blechen zugewandten Seite, die zur Bildung der Außenhaut (16) mit leichterer Krümmung bestimmt sind, in einem Bereich, der dazu vorgesehen ist, durch mechanische Bearbeitung nach dem Formvorgang durch ein Ausschneiden (40,42) eines Stücks (44,46) in mindestens einem (T2,3) der ersten Bleche parallel zum Rand der herzustellenden Struktur eliminiert zu werden,
- Verstärken der Dicke der zweiten Bleche (T4 bis T6) durch Hinzufügen des Stücks (44,46) auf der den ersten Blechen zugewandten Seite, so daß das Stück den Ausschnitt (40,42) beim Anordnen der Bleche (T1 bis T6) in der Werkzeuganordnung genau ausfüllt.

9. Verfahren gemäß Anspruch 8, **dadurch gekennzeichnet, daß**, nachdem jede der Außenhäute (16,18) in den zur Verstärkung vorgesehenen Bereichen aus mindestens drei Blechen (T1 bis T3, T4 bis T6) geformt ist, ein Stück (44,46) in den den zweiten Blechen (T4 bis T6) zugewandten zwei ersten Blechen (T2,T3) ausgeschnitten wird, wobei die Breite des in dem ersten Blech (T2) ausgeschnittenen Stücks (44), das am weitesten von den zweiten Blechen entfernt ist, kleiner ist als diejenige des in dem den zweiten Blechen nächstliegenden ersten Blech (T3) ausgeschnittenen Stücks (46).

## Claims

1. Asymmetrical, one-piece, hollow metal structure, comprising:
- two outer skins (16, 18) with substantially differing curvatures connected to one another by an edge (20) and moving progressively away from one another as from said edge
**characterized in that** the structure comprises inner reinforcements defining several pairs of closed cavities (26, 28) between the two outer skins (16, 18), the cavities of each pair being separated by a median bulkhead (30) placed between the two outer skins and defined by connecting bulkheads (32, 34) connecting the median bulkhead (30) to each of the outer skins (16, 18).

2. Structure according to claim 1, **characterized in that** each pair of cavities (26, 28) has a plane of symmetry (P) substantially perpendicular to the edge (20) of the structure, the planes of symmetry of said pairs of cavities being regularly spaced in such a way that the cavities (26, 28) are juxtaposed in the chord direction of said edge (20).

3. Structure according to claim 2, **characterized in that** the cavities (26, 28) are elongated in their plane of symmetry (P) and have a smaller width in this direction.

4. Structure according to any one of the preceding claims, **characterized in that** the connecting bulkhead (32, 34) of each cavity (26, 28) is inclined by an angle between approximately 30° and approximately 35°, with respect to the outer skin (16, 18) to which said connecting bulkhead is joined, so that the cavity has a section parallel to said skin decreasing up to the median bulkhead (30).

5. Structure according to any one of the preceding claims, **characterized in that** the outer skins (16, 18) have in their portions outside the cavities (26, 28) a greater thickness than in their portions defining the cavities, the median bulkheads (30) and the connecting bulkheads (32, 34).

6. Structure according to any one of the preceding claims, **characterized in that** the two outer skins comprise a convex skin (16) and a concave skin (18), the median bulkhead (30) being substantially equidistantly positioned between these two skins.

7. Structure according to any one of the preceding claims, **characterized in that** it constitutes at least one section of the trailing edge (14) of a leading edge slat (12) of an aircraft wing (10).

8. Process for manufacturing a one-piece, hollow metal structure, by diffusion welding and superplastic forming, comprising the following stages:
- preparation of sheets (T1 to T6) for forming two outer skins (16, 18) and inner reinforcements of the structure, with a view to defining areas to be welded on the facing surfaces of said sheets,
- placing the stacked sheets in a welding and forming tooling (38) and closing the tooling by pinching peripheral edges of the sheets (T1 to T6),
- heating and applying a first pressure in the tooling (38) on either side of the stacked sheets in order to perform the diffusion welding thereof,
- eliminating the first pressure and applying a second pressure between the sheets forming the outer skins and the sheets forming the inner reinforcements, in order to carry out superplastic forming,
- cooling, opening the tooling and machining the structure obtained,
**characterized in that**, as the structure to be manufactured is asymmetrical and has two outer skins with substantially different curvatures, which are joined along an edge, move progressively away from one another as from said edge and are in each case formed by at least two sheets (T1 to T3, T4 to T6) in regions of the structure free from inner reinforcements, the placing of the stacked sheets in the tooling (38) is preceded by the following stages:
- reduction of the thickness of the first sheets (T1 to T3) for forming the outer skin (18) with the greatest curvature, from the side turned towards the second sheets for forming the outer skin (16) with the smallest curvature, in a region which is to be eliminated by machining following forming, by cutting (40, 42) a part (44, 46) in at least one (T2, T3) of the first sheets parallel to the edge (20) of the structure to be manufactured,
- increasing the thickness of the second sheets (R4 to R6) by adding said part (44, 46) from the side turned towards the first sheets, so that said part precisely fills said cutout (40, 42) during the placing of the sheets (T1 to T6) in the tooling.

9. Process according to claim 8, **characterized in that** each of the outer skins (16, 18) being formed at least three sheets (T1 to T3, T4 to T6) in regions free from reinforcements, cutting takes place of a part (44, 46) in the first two sheets (T2, T3) turned towards the second sheets (T4 to T6), the width of the part (44) cut in the first sheet (T2) furthest from the second sheets being smaller than that of the part (46) cut in the first sheet (T3) closest to the second sheets.
